# EUROPEAN PATENT APPLICATION

(11) **EP 2 072 840 A1**
(43) Date of publication of application: **24.06.2009**
(21) Application number: 07396008.0
(22) Date of filing: 21.12.2007
(51) Int. Cl.: F16B 17/00

(54) **Joint**

(71) Applicant: Samesor Oy, 70461 Kuopio (FI)
(72) Inventor: Keinänen, Rauno, 73300 Nilsiä (FI)
(74) Representative: Pitkänen, Hannu Alpo Antero

(57) **Abstract**

The invention relates to a joint, particularly for jointing together two components (1, 3) manufactured of sheet metal, which joint includes a first joint part (2) formed in the sheet metal of a first component (1) and a second joint part (4) formed in the sheet metal of a second component (3) by which parts the components are fastened together. It is characteristic of the joint according to the invention that the first joint part (2) is a recessed hole (5) formed in the sheet metal and the second joint part (4) is a recessed and flanged hole (6) formed in the sheet metal and that, in the joint, the recesses of the joint parts (2, 4) are within each other so that the flanges of the recessed and flanged hole (6) are fitted through the recessed hole (5) and bent against the edges of the recessed hole, and that the recess includes a lowering part (7) being obliquely downwards and towards the edges of the hole and a mainly horizontal fastening part (8) between the lowering part and the edge of the hole (5).

## Description

The invention relates to a joint which is described in the preamble of claim 1.

The joint is intended particularly for joining together two components manufactured of sheet metal, and the joint includes a first joint part formed in the sheet metal of a first component and a second joint part formed in the sheet metal of a second component, by which parts the components are fastened together.

In order to decrease joining work and costs accrued from it, in the joints between components manufactured of sheet metal, such as thin-walled section beams, different plain mechanical joints without additional means have been started to utilise instead of separate fastening members. In such joints, the fastening members of the joint are formed of the material of the component by moulding and/or working the material in different ways. Usually, these plain fastening members without additional means are formed in the component already in its manufacturing stage, whereby the assembly stage of the structures solely requires fastening the ready plain fastening members (i.e. joint parts) together. Such a joint used in, inter alia, the fastening of thin-walled section beams is e.g. a plain joint based on a collar and a through hole described in US-patent 5839848. Therein, a collar formed in one component is fitted through a through hole in another component, after which the collar is bent by moulding it around the through hole so that the component with the collar is fastened in the component with the through hole.

It is often necessary to mould the joint parts of recently known plain joints relatively lot in the fastening stage of the joint. For example, bending a collar moulded in a plate around a through hole causes a large elongation on the edge of the collar. As a result of this, fractures and/or reductions of area at fractures can be formed in the joint parts if the moulding properties of the material of the components being joined are not good enough in relation to the thickness of the plate used and the height of the collar. A fracture or large elongations of the joint part close to the breaking limit and/or reductions of area at fractures cause the weakening of the joint. Naturally, this is dangerous e.g. in joints between different components used in frame structures, such as thin-walled section beams.

An object of the invention is to provide a joint by means of which above-mentioned problems related to recently known plain joints of components manufactured of sheet metal are eliminated. Particularly, an object of the invention is to introduce a plainly formed joint, in which moulding the sheet metal does not cause too great plastic deformations in the joint parts in relation to the moulding properties of the material. Furthermore, an object of the invention is to introduce a plainly formed joint manufacturable by relatively simple tools, by means of which is provided joint strength corresponding the load-carrying capacity required of the joints of e.g. section beams used in frame structures.

The object of the invention is achieved with a joint which is characterised by what is presented in the claims.

The joint according to the invention is characterised by what is presented in the characterising part of claim 1.

In the joint, the first joint part is a recessed hole formed in the sheet metal and the second joint part is a recessed and flanged hole formed in the sheet metal and, in the joint, the recesses are within each other so that the flanges of the recessed and flanged hole are fitted through the recessed hole and bent against the edges of the recessed hole. Furthermore, the recess includes a lowering part being obliquely downwards and towards the edges of the hole and a mainly horizontal fastening part being between the lowering part and the edge of the hole.

Manufacturing such a plain joint does not cause great plastic deformations in the sheet metal. Also, in the fastening stage of the joint, no great deformations are caused in the joint parts. Thus, no fractures or reductions of area at fractures, which could weaken the strength of the joint, are not formed in the joint even though the moulding properties of the material were relatively poor. Additionally due to the recesses, the strength and rigidity of the joint are greater in relation to joints utilising non-recessed holes. Furthermore, pull tests done to the joint have proved that the strength of such a joint is such that it can be used for joining together, inter alia, thin-walled section beams of load-bearing frame structures. By means of such a recess, the joint gains more strength, because the recess and the edge of the flanged hole following its shape prevent the moving of overlapping plate layers in relation to each other. Also the rigidity of the joint increases as the cross-sectional area of the joint area increases.

In an embodiment of the joint according to the invention, the recesses are formed by moulding the edge areas of the hole in relation to the other parts of the sheet metal such that the edge of the hole is on a different plane in relation to the other parts of the sheet metal. Such a recess increases the strength and rigidity of the joint. In addition, manufacturing such a recess is easy in connection with making the holes e.g. with the same tool as the holes.

In an embodiment of the joint according to the invention, the upper surface of the fastening part is lower for at least one plate thickness in relation to the upper surface of the sheet metal surrounding the lowering part. When the upper surface of the component is always chosen as the upper surface of the joint, no elevations are formed outside the components being joined which could impede the fastening of the other components in the structure formed of the components.

The invention will now be described in more detail with reference to the accompanying drawings in which
Fig. 1 shows a cross section of joint parts of a joint between two components manufactured of sheet metal, the joint parts being apart from each other,
Fig. 2 shows a cross section of the joint parts of Fig. 1 when the joint parts are fitted against each other so that the recesses of the joint parts are fitted within each other and the flanges of the second joint part are fitted through the recessed hole of the first joint part,
Fig.3 shows a cross section of the finished joint formed of the joint parts illustrated in Figs. 1 and 2, and
Fig. 4 shows a top plan view of the joint in accordance with Fig. 3.

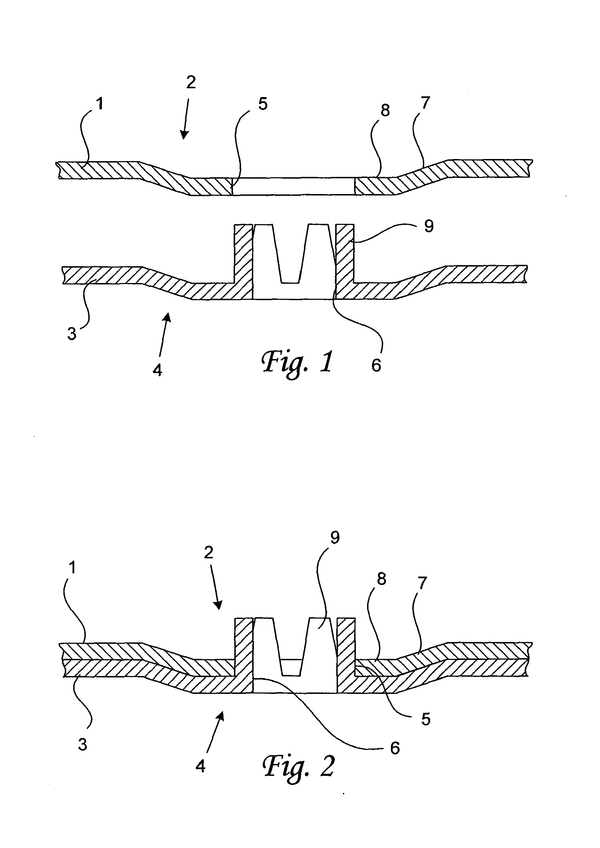

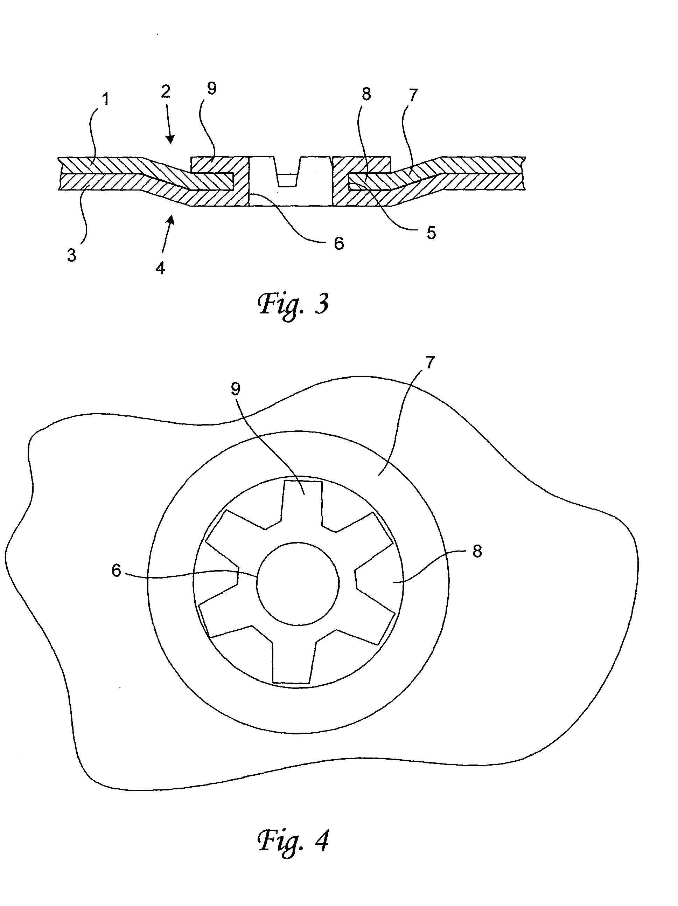

By means of a joint according to Figs. 1-4, two components manufactured of sheet metal are fastened together. These components can be e.g. thin-walled section beams of a wall frame structure of a building. The joint includes a first joint part 2 formed in a first component 1 and a second joint part 4 formed in a second component 3 fastened to it. The first joint part 2 includes a recessed hole 5 and the second joint part a recessed and flanged hole 6. The joint parts are fastened together by first fitting the flanges of the second joint part through the hole of the first joint part so that the recesses come within each other against each other and by then bending flanges 9 of the second joint part against the edges of the recessed hole of the first joint part, whereby the joint parts are fastened together. This can be done e.g. by a moulding tool pushed through the holes in the joint parts which, when expanding, presses the joint parts against each other and simultaneously bends the flanges 9 around the edges of the recessed hole 5 of the first joint part 2.

The recessed hole 5 of the first joint part 2 comprises a circular fastening part 7 moulded around the hole and a lowering part 8 formed around it. The lowering part 8 is in an oblique position in relation to the sheet metal surrounding it so that, when approaching the edge of the hole 5, the upper surface of the fastening part 7 after the lowering part 8 moves lower approximately for the thickness of the plate in relation to the surface of the sheet metal surrounding the lowering part. The shape of the recess of the second joint part 4 corresponds the one of the recess of the first joint part but is slightly larger so that the recess of the first joint part 2 can be fitted within the recess of the second joint part 4.

The flanged hole 6 of the second joint part 4 comprises a recessed hole formed in the sheet metal on the edges of which there are the flanges 9 bent in a vertical position in relation to the plane formed by the sheet metal. As mentioned above, the shape of the recess corresponds the shape of the recessed hole 5 of the first joint part 2 but the size of the recess is slightly larger so that the recess of the first joint part 2 can be fitted within the recess of the second joint part 4. On the other hand, the outer diameter of the circle formed by the flanges 9 of the second joint part is approximately the size of the inner diameter of the hole of the first joint part so that the flanges 9 can be fitted through the hole of the first joint part. The height of the flanges in this embodiment is approximately the same as the sum of the thickness of the plate and the width of the fastening part contained by the first joint part. Then, the flanges can be bent on top of the fastening part of the first part so that the tips of the flanges 9 extend somewhat at the point of a fold between the lowering part 7 and the fastening part 8 of the first joint part. The flanges 9 can also be longer than this. Then, their tips extending in the area of the lowering part 7 are bent in an oblique position corresponding the position of the lowering part.

The joint according to the invention is not limited to the embodiment of the example described above. For example, the shape of the recess can vary. In some embodiment, the shape of the recess can be curvilinear or shaped e.g. such that the lowering part is almost perpendicular in relation to the fastening part and the plane formed by the surrounding sheet metal. Also, the number, shape and length of the flanges included by the recessed and flanged hole of the second joint part, among others, can vary. In some embodiment, the shape of the hole can be e.g. quadrangular, pentagonal or hexagonal. Then, the recessed and flanged hole of the second joint part includes four, five or six flanges.

The invention is not limited to the described advantageous embodiments, but it can vary within the scope of the inventive idea presented in the claims.

## Claims

1. A joint, particularly for joining together two components (1, 3) manufactured of sheet metal, which joint includes a first joint part (2) formed in the sheet metal of a first component (1) and a second joint part (4) formed in the sheet metal of a second component (3), by which the components are fastened together, ***characterised* in that** the first joint part (2) is a recessed hole (5) formed in the sheet metal and the second joint part (4) is a recessed and flanged hole (6) formed in the sheet metal and that, in the joint, the recesses of the joint parts (2, 4) are within each other so that the flanges of the recessed and flanged hole (6) are fitted through the recessed hole (5) and bent against the edges of the recessed hole, and that the recess includes a lowering part (7) being obliquely downwards and towards the edges of the hole and a mainly horizontal fastening part (8) between the lowering part and the edge of the hole (5).

2. A joint according to claim 1, ***characterised* in that** the recesses are formed by moulding the edge areas of the hole (5, 6) in relation to the other parts of the sheet metal such that the edge of the hole is on a different plane in relation to the other parts of the sheet metal.

3. A joint according to claim 1, ***characterised* in that** the upper surface of the fastening part (8) is lower for at least one plate thickness in relation to the upper surface of the sheet metal surrounding the lowering part (7).

4. A joint according to claim 3, ***characterised* in that** the flanges (9) of the recessed and flanged hole (6) are bent against the fastening part (8) of the recessed hole (5).
